# FASCICULE DE BREVET EUROPEEN

(11) **EP 2 733 012 B1**
(45) Date de publication et mention de la délivrance du brevet: **19.11.2014**
(21) Numéro de dépôt: 13005403.4
(22) Date de dépôt: 18.11.2013
(51) Int. Cl.: B60N 2/00, B64D 11/06, H01F 38/14, H01R 25/14

(54) **Dispositif d'alimentation électrique sans fil d'équipements installés à l'intérieur d'un aéronef**
Vorrichtung zur drahtlosen Stromversorgung von Geräten, die im Innern eines Luftfahrzeugs eingebaut sind
Device for wirelessly supplying power to devices installed inside an aircraft

(30) Priorité: 19.11.2012 FR 1203100
(43) Date de publication de la demande: 21.05.2014
(73) Titulaire: Airbus Helicopters, 13725 Marignane Cedex (FR)
(72) Inventeur: Imbert, Nicolas, 13008 Marseille (FR); Chuc, Charles, 13012 Marseille (FR)
(74) Mandataire: GPI & Associés

(56) Documents cités:
- EP-A1- 2 452 874
- WO-A1-03/055726
- WO-A1-2010/053011
- DE-A1- 10 257 273
- DE-A1-102009 054 700
- DE-C1- 10 106 173
- DE-C1- 19 743 313
- US-A1- 2005 230 543
- US-A1- 2012 210 372

## Description

La présente invention est du domaine des équipements électriques de véhicules, tels que des aéronefs. La présente invention concerne un dispositif d'alimentation électrique sans fil d'équipements installés à l'intérieur d'un aéronef, tels que des sièges, ainsi qu'un aéronef comportant un tel dispositif.

Il est de plus en plus fréquent que soient implémentées sur les sièges de véhicules des fonctions électriques de différents types, telle une fonction sécurité par le biais de coussins gonflables couramment dénommés en langue anglaise « airbag » par exemple, une fonction confort remplie par exemple à l'aide de moyens chauffants, des fonctions d'informations pour par exemple détecter la présence de passagers, fournir un système de communication ou bien un système multimédia via un écran vidéo.

Dans le cas particulier des aéronefs, des reconfigurations de la cabine sont fréquentes, nécessitant alors le déplacement, la réorientation, l'ajout ou la suppression de un ou plusieurs équipements, ainsi que les différents éléments auxquels ils peuvent être reliés ou associés.

Des sièges équipés par exemple d'airbag sont aujourd'hui utilisés, notamment dans les aéronefs à voilure tournante, mais sont d'une manière générale autonomes électriquement, en embarquant une batterie permettant d'alimenter électriquement l'airbag et un calculateur électronique commandant le déploiement de l'airbag. Dans ce cas, la masse ajoutée au siège peut-être conséquente, rendant ainsi son déplacement pénible.

De plus, du fait de cette autonomie électrique et électronique, les risques de déploiement intempestif de l'airbag sont importants lors de toute manipulation du siège et nécessitent donc de prendre des précautions supplémentaires.

Enfin, les fonctions électriques et électroniques intégrées au siège, tel que l'airbag, sont parfois critiques, nécessitant des systèmes électroniques complexes et sensibles à toute perturbation extérieure, et bien souvent à durée de vie limitée. Les coûts d'entretien et de maintenance associés peuvent donc être importants.

A la vue des risques et contraintes précédemment cités, il est fréquent aujourd'hui de ne pas intégrer de telles fonctions électriques aux sièges des aéronefs.

Il est par contre d'usage courant d'utiliser de nombreuses fonctions électriques et électroniques dans les véhicules automobiles, et particulièrement dans les sièges avant de ces véhicules. Dans ce cas, le positionnement des sièges est unique et définitif et l'alimentation électrique est généralement réalisée par un faisceau électrique sortant du plancher et équipé d'un connecteur. Ce faisceau est relié manuellement au connecteur correspondant sur le siège en usine lors de l'assemblage du véhicule et aucune contrainte particulière n'est donc attachée à l'intégration du faisceau et du connecteur dans le plancher du véhicule, si ce n'est de respecter les différents déplacements possibles du siège. Ainsi durant la vie du véhicule, il n'y aura aucun déplacement ou démontage de ces sièges (sauf cas exceptionnel de réparation en garage), ces zones n'étant pas configurables.

Certains véhicules automobiles, type monospace, comportent une zone arrière où les sièges peuvent facilement être démontés, déplacés et positionnés dans différentes configurations. Mais dans ce cas, ils n'ont aucune fonction électrique de puissance ou d'information, leur modularité étant incompatible avec la présence d'un faisceau électrique sur le plancher.

Il est également connu, pour des liaisons électriques présentes dans les véhicules de tout type, d'utiliser classiquement des connexions de type contacts mâle/femelle, l'une coopérant avec l'autre. Si le fonctionnement de ces liaisons, dans un environnement propre, est fiable, il est très sensible aux pollutions environnementales (poussières, eau, sable, boue...) qui peuvent perturber la liaison électrique, provoquer des courts-circuits et des dégradations mécaniques suivant la nature des objets s'introduisant aux niveaux des contacts.

Par ailleurs, il existe aujourd'hui des solutions pour réaliser des transferts d'informations sans liaison filaire. Par exemple, des solutions selon des technologies *Bluetooth*^{®} et *Wi-Fi*^{®} sont largement utilisées en informatique et en téléphonie mobile.

De récents développements ont permis également de réaliser des transmissions d'énergie électrique sans fil, en utilisant des systèmes fonctionnant selon le principe du « transformateur à air ». Ce principe utilise le phénomène physique du couplage inductif entre deux bobines, une bobine primaire présente dans un circuit primaire d'un élément émetteur et une bobine secondaire présente dans un circuit secondaire d'un élément récepteur. Il s'agit en fait du même principe qui est utilisé dans les transformateurs classiques que l'on peut trouver dans la plupart des appareils électriques. La principale différence est la présence dans un transformateur classique d'un circuit ferromagnétique guidant le champ magnétique à travers les deux bobines alors que pour un « transformateur à air », le champ magnétique est transmis de la bobine primaire à la bobine secondaire à travers l'air les séparant.

Cependant, lorsque le couplage inductif est réalisé dans l'air, c'est-à-dire sans circuit magnétique pour guider le champ magnétique entre les bobines primaire et secondaire, les fuites magnétiques peuvent être importantes. Ces fuites magnétiques varient notamment selon les positions relatives des bobines primaire et secondaire et augmentent avec la distance les séparant.

Une première application de ce principe de « transformateur à air » est le transfert d'énergie électrique à courte distance, de l'ordre de quelques centimètres. Cette première application utilise le phénomène physique de l'induction magnétique entre la bobine primaire liée à l'élément émetteur et la bobine secondaire liée à l'élément récepteur. Un champ magnétique créé par la bobine primaire génère alors l'apparition d'un courant électrique induit dans la bobine secondaire et, par suite, dans le circuit secondaire. On dénommera dans la suite de la description cette application à courte distance du couplage inductif « induction courte distance ». Il existe aujourd'hui quelques applications de l'induction courte distance. Par exemple, la recharge de certaines brosses à dents électriques est réalisée par induction courte distance et des solutions identiques pour recharger notamment les téléphones portables sont envisagées à courts termes.

Une seconde application de ce principe de « transformateur à air » est le transfert d'énergie électrique à grande distance, de l'ordre de quelques centimètres à deux mètres environ. Cette seconde application utilise également le phénomène physique de l'induction magnétique, mais plus précisément le principe de résonnance magnétique. Selon ce principe, et afin de limiter les pertes par fuite magnétique lorsque la distance entre les bobines primaire et secondaire augmente, un champ magnétique est généré par la bobine primaire avec une fréquence prédéterminée qui provoque une résonnance magnétique de la bobine secondaire générant l'apparition d'un courant électrique induit dans cette bobine secondaire et, par suite, dans le circuit secondaire. Par contre, pour un fonctionnement avec un rendement correct, l'élément récepteur doit être positionné à une distance prédéterminée et précise de l'élément émetteur et les caractéristiques électriques des circuits primaire et secondaire, telles que leurs capacités et leurs inductances propres ainsi qu'une inductance mutuelle aux bobines primaire et secondaire associées par couplage inductif, doivent être définies avec précision. De plus, la fréquence prédéterminée du champ magnétique primaire est définie notamment par le type de bobines primaire et secondaire et la puissance électrique fournie par le circuit secondaire pour alimenter les fonctions électriques liées à ce circuit secondaire. On dénommera par la suite cette application à grande distance du couplage inductif, « induction grande distance ». Il n'existe pas à ce jour d'application industrielle de l'induction grande distance, mais son utilisation est envisagée, suite à des essais concluants, pour notamment la recharge de voitures électriques, la bobine primaire étant par exemple noyée dans le sol et la voiture électrique se positionnant au-dessus. Cette seconde application est également connue sous le terme « WiTricity^{®} », qui est un mot-valise correspondant à l'expression anglaise « wireless electricity ».

Dans les deux cas, une boucle d'asservissement apparait entre les bobines primaire et secondaire, le courant électrique circulant dans la bobine primaire ainsi que le courant électrique induit circulant dans la bobine secondaire étant des courants électriques alternatifs. Cette boucle d'asservissement permet notamment un échange entre les bobines primaire et secondaire, le courant circulant dans le circuit primaire s'adaptant alors au besoin en puissance des fonctions électriques reliées au circuit secondaire. Ainsi, le courant électrique induit circulant dans le circuit secondaire est suffisant pour alimenter ces fonctions électriques.

Les documents US 2007/0164156 et US 2005/0211835 présentent un système de rail d'alimentation électrique cheminant, sur la longueur totale de la cabine d'un avion, afin d'alimenter électriquement les sièges des passagers installés dans cette cabine. Ce rail d'alimentation comporte une ou plusieurs lignes conductrices sur l'ensemble de sa longueur, qui peuvent être connectées à des sources de puissance électrique et d'informations. Ce rail est positionné au-dessus du plancher à proximité du rail de fixation des sièges et est ouvert sur un de ces côté, sur l'ensemble de sa longueur. Un connecteur relié électriquement à chaque siège ou rangée de sièges peut alors être connecté, à travers cette ouverture, et en tout point de la cabine de l'avion, à ce rail d'alimentation afin d'établir la liaison électrique entre les sièges et les différentes sources de puissance et d'informations. Les lignes conductrices à l'intérieur du rail sont protégées de l'environnement extérieur, notamment par des lèvres en matériau souple côté ouvert du rail, ce qui assure une étanchéité tout en permettant l'introduction des connecteurs reliés aux sièges. Une fois l'ensemble des sièges positionnés et connectés au rail d'alimentation, des zones du rail d'alimentation, notamment à proximité des soubassements des sièges, restent accessibles. Les soubassements, également dénommés piétements, constituant la partie basse des équipements, permettent de fixer l'équipement sur le plancher. La couverture des rails de fixation des sièges doit alors être réaménagée afin de s'adapter aux positions des sièges et couvrir la zone à proximité des soubassements de sièges et des connecteurs branchés au rail d'alimentation, empêchant ainsi l'accès à ce rail d'alimentation.

On connait également le document US 2006/0038070 qui décrit un système et un procédé de câblage pour fournir une puissance électrique et/ou des informations dans une cabine d'un véhicule et plus particulièrement à des sièges installés dans cette cabine. Une pluralité de connecteurs inférieurs sont fixés dans des panneaux du plancher de la cabine et reliés à un faisceau électrique du véhicule. Des connecteurs supérieurs, reliés par exemple à l'unité électronique des sièges, peuvent être connectés aux connecteurs inférieurs afin de relier électriquement ces sièges au faisceau électrique du véhicule.

De plus, le document US 2006/0097109 décrit un dispositif de capot couvrant les rails de fixation des sièges entre les rangées de sièges installées dans la cabine d'un véhicule, un avion par exemple. Ce dispositif de capot est ajustable afin de s'adapter à l'espace disponible entre les rangées de sièges. Ce dispositif comprend également un faisceau électrique et des connecteurs afin de relier électriquement chaque siège au véhicule.

On connait le document US 4763360 qui décrit un système d'électrification de sièges de véhicule utilisant les rails de fixation de ces sièges. En effet, un rail de fixation comprend une ou deux bandes conductrices fixées le long du rail et séparées du rail par un isolant. Lors de la fixation du siège, un dispositif intégré au siège permet de réaliser une liaison électrique entre le siège et ces bandes conductrices permettant ainsi la transmission d'une puissance électrique et/ou d'informations.

Le document US 2005/0258676 décrit un système et un procédé de distribution de signaux électriques de puissance et/ou d'informations à des équipements d'une cabine d'un véhicule et plus particulièrement à des sièges installés dans cette cabine. Un rail d'alimentation électrique chemine sous le plancher de la cabine et un siège peut être relié à ce rail d'alimentation électrique en tout point de la cabine du véhicule par l'intermédiaire d'un connecteur.

Par ailleurs, le document US 2010/0007805 décrit un dispositif vidéo qui peut être intégré dans un appui-tête d'un véhicule. La transmission des informations vidéo ainsi que de la puissance électrique alimentant ce dispositif vidéo est réalisée sans liaison filaire. Pour la transmission de la puissance électrique, une bobine primaire est positionnée dans le siège supportant l'appui-tête, de préférence en haut du dossier de ce siège, et une bobine secondaire est intégrée au dispositif vidéo. La bobine primaire est reliée au circuit électrique du véhicule et permet, par couplage inductif avec la bobine secondaire, la recharge d'une batterie alimentant électriquement le dispositif vidéo.

On connait également le document US 2011/0018498 qui décrit un système de recharge d'un équipement électrique. Cet équipement électrique est porté par un utilisateur et contient une batterie qui est chargée électriquement lorsque l'utilisateur est assis dans un siège adapté, par exemple à bord d'un véhicule. Ce siège comporte une bobine primaire installée dans le dossier et l'équipement électrique comporte une bobine secondaire positionnée afin de réaliser un couplage inductif avec la bobine primaire dès que l'utilisateur est assis dans un siège. Ce système de recharge permet également de transmettre des d'informations entre le véhicule et cet équipement électrique.

Le document US 2012/0146425 décrit quant à lui un appareil émetteur-récepteur capable de transmettre une puissance électrique sans fil en utilisant le phénomène de résonnance magnétique. En mode émetteur, cet appareil est notamment capable de générer le signal de puissance à transmettre, de déterminer si un appareil récepteur est connecté et de s'adapter à la distance entre l'appareil émetteur et l'appareil récepteur. En effet, cet appareil, en mode émetteur ainsi qu'en mode récepteur, est capable d'adapter ces caractéristiques électriques afin de réaliser une transmission optimum de la puissance électrique en fonction de la distance entre l'appareil émetteur et l'appareil récepteur, et notamment si cette distance varie lors de la transmission.

En outre, le document DE10257273 décrit un siège fixé dans des rails sur un plancher d'un véhicule, le siège pouvant coulisser dans les rails. Le siège est fixé au-dessus du plancher, un dispositif inductif positionné dans le rail permettant de relier électriquement le siège au véhicule.

De plus, on connait le document DE19743313 qui décrit un siège positionné dans des rails de guidage d'un plancher d'un véhicule tel un train ou bien un avion. Une liaison électrique par induction est réalisée dans ce rail par l'intermédiaire d'un transmetteur relié au véhicule et d'un récepteur relié au siège. Le transmetteur peut se déplacer dans le rail suivant la position du siège par rapport à ce rail.

Par ailleurs, le document DE102009/054700 décrit un siège positionné dans un véhicule tel un aéronef ou bien un vaisseau spatial par un rail de guidage, chaque siège pouvant avoir différentes positions dans le véhicule. Le rail de guidage comporte des bobinages primaires dont au moins un coopère avec un bobinage secondaire lié au siège. La position du siège dans le véhicule peut ainsi être connue par l'intermédiaire d'une liaison électrique par induction.

Le document WO03/055726 décrit également un siège mobile dans des rails d'un véhicule automobile et comportant au moins un élément de sécurité. Une communication est établie entre une unité de contrôle du véhicule et l'élément de sécurité afin de contrôler et de confirmer la présence du siège par deux systèmes indépendants, au moins un système étant un dispositif de liaison sans fil telle une liaison par induction.

On connait aussi le document US 2005/0230543 qui décrit un système d'alimentation électrique de sièges destinés plus particulièrement à un aéronef. Ce système d'alimentation électrique comporte un bus s'étendant sur la longueur d'une cabine de l'aéronef et relié à une ou plusieurs sources d'énergie et/de données, un connecteur permettant de relier un siège ou une rangée de siège à ce bus et, par suite à chaque source d'énergie et/de données.

On connait enfin, dans l'arrière plan technologique, les documents DE10106173 qui décrit un dispositif de transmission d'énergie électrique et/ou de données entre un véhicule et un équipement de ce véhicule utilisant la technologie de l'induction magnétique et le document WO2010/053011 qui décrit un système de chauffage par induction, ainsi que les documents EP2452874 et US2012/0210372 qui décrivent un rail de sièges pour un avion permettant de transmettre des signaux électriques entre l'avion et les sièges, les signaux électriques étant transmis via la matière elle-même du rail, sans utilisation d'autres conducteurs ou câbles.

Par ailleurs, on comprend que l'augmentation des fonctions électriques de différents types, intégrées dans les équipements de véhicules, et notamment dans les sièges, ne sont pas forcément compatibles avec la modularité dont doivent faire preuve aujourd'hui les cabines de ces véhicules.

En effet, la reconfiguration des cabines d'aéronef est en général soumise à des contraintes de temps afin de limiter l'immobilisation du véhicule au minimum. Il est donc difficilement envisageable, dans le cas de reconfiguration d'une cabine équipée d'équipements comportant des fonctions électriques, d'avoir à modifier l'implantation de l'ensemble des faisceaux électriques d'alimentation de ces équipements.

De plus, la surface supérieure du plancher de la cabine doit éviter de gêner, aussi bien le chargement de charges que le déplacement de personnes. Il convient également d'éviter d'avoir des éléments électriques risquant d'être dégradés par le passage de personnes ou de charges.

Enfin, l'environnement extérieur parfois agressif dans lequel peuvent évoluer ces véhicules est une contrainte supplémentaire à prendre en compte, notamment en présence de fonctions électriques.

La présente invention a alors pour objet de proposer un dispositif d'alimentation électrique sans fil d'équipements permettant de s'affranchir des limitations mentionnées ci-dessus, en permettant de reconfigurer de façon rapide les équipements comportant des fonctions électriques à l'intérieur d'un véhicule, tout en restant compatible avec les divers environnements extérieurs auxquels peut être confronté le véhicule.

L'invention vise un dispositif d'alimentation électrique sans fil d'équipements d'un véhicule comprenant au moins un faisceau électrique dénommé « harnais » par commodité, au moins un élément émetteur et au moins un élément récepteur.

Chaque harnais est pourvu d'au moins deux conducteurs électriques, qui peuvent être reliés électriquement d'une part à au moins une source d'alimentation électrique du véhicule et d'autre part à au moins un élément récepteur.

De plus, les conducteurs électriques du harnais peuvent également être reliés électriquement à une ou plusieurs sources d'informations du véhicule correspondant aux différentes fonctions électriques intégrées aux équipements, éventuellement par l'intermédiaire d'un calculateur électronique centralisant l'ensemble de ces sources d'informations.

Chaque élément émetteur coopère avec au moins un élément récepteur afin de lui transmettre un signal électrique contenant une énergie électrique et éventuellement des informations nécessaires au fonctionnement des différentes fonctions électriques intégrées aux équipements correspondants.

Ce dispositif est remarquable en ce que le harnais est apte à cheminer dans une épaisseur d'un plancher du véhicule et chaque élément émetteur est apte à être noyé dans cet épaisseur du plancher. De ce fait, les surfaces inférieure et supérieure du plancher sont libérées de tout élément électrique et ne présente aucune partie saillante. Ainsi, tout équipement ou toute charge peuvent être déplacés facilement sur la surface supérieure du plancher. De plus, la surface inférieure du plancher ne comporte aucune aspérité risquant d'endommager un réservoir souple se trouvant sous le plancher.

Chaque élément récepteur est apte à être positionné dans un équipement et relié électriquement aux différentes fonctions électriques intégrées à cet équipement, éventuellement par l'intermédiaire d'un calculateur électronique centralisant l'ensemble de ces fonctions, chaque équipement étant apte à être installé à proximité du plancher.

Chaque élément émetteur comporte un circuit primaire contenant au moins une bobine primaire et relié électriquement par l'intermédiaire d'au moins un conducteur électrique du harnais à au moins une source d'alimentation électrique du véhicule. De même, chaque élément récepteur comporte un circuit secondaire contenant au moins une bobine secondaire et relié électriquement aux différentes fonctions électriques intégrées à cet équipement.

Le circuit secondaire peut également comporter un convertisseur d'énergie qui relie ce circuit secondaire aux différentes fonctions électriques de l'équipement et sert à adapter le courant électrique circulant dans le circuit secondaire au besoin de chaque fonction électrique.

Chaque bobine primaire et chaque bobine secondaire sont réalisées par un enroulement d'au moins un fil conducteur tel que du cuivre.

Chaque élément émetteur est positionné, dans l'épaisseur du plancher de l'aéronef, à des endroits proches des positions potentielles de ces équipements suivant l'ensemble des configurations possibles. En effet, le véhicule doit répondre à différentes réglementations pour chaque configuration de cabine, particulièrement pour chaque position de sièges. Ces positions, même si elles peuvent être nombreuses, ne sont donc pas illimitées, mais au contraire strictement définies et connues.

Ces positions potentielles d'équipements correspondent donc à l'ensemble des certifications passées pour ce véhicule. Il n'est d'ailleurs pas rare de trouver dans certaines zones de véhicules, tels que des aéronefs, des rails d'une longueur d'environ 20 cm, limités donc à l'emplacement strict d'un seul siège. Il est alors possible de positionner dans l'épaisseur du plancher du véhicule un élément émetteur pour chaque position potentielle de sièges suivant l'ensemble des configurations certifiées.

Le plancher du véhicule est en un matériau perméable aux ondes électromagnétiques entre chaque élément émetteur et chaque équipement situé à proximité de ce plancher, permettant ainsi la circulation d'au moins un champ magnétique entre chaque bobine primaire d'un élément émetteur et chaque bobine secondaire d'un élément récepteur. Un couplage inductif peut ainsi être établi entre chaque bobine primaire de cet élément émetteur, dans laquelle circule un courant électrique alternatif, et chaque bobine secondaire de cet élément récepteur. De la sorte, un courant électrique alternatif induit apparait dans la bobine secondaire de l'élément récepteur et circule dans le circuit secondaire, et par suite, alimente les différentes fonctions électriques intégrées à l'équipement. Ce courant électrique alternatif induit correspond au signal électrique de l'élément émetteur et comporte une énergie électrique ainsi qu'éventuellement des informations nécessaires au fonctionnement des différentes fonctions électriques intégrées à cet équipement.

La transmission de cette énergie électrique de l'élément émetteur à l'élément récepteur peut être faite par induction courte distance ou bien par induction grande distance.

Selon un premier mode de réalisation de l'invention, la transmission de cette énergie électrique est faite par induction courte distance. Les bobines primaire et secondaire doivent alors être proches l'une de l'autre, la distance les séparant ne devant pas excéder quelques centimètres. De fait, l'élément émetteur et l'élément récepteur doivent se trouver de part et d'autre d'une paroi du plancher du véhicule, cette paroi étant en un matériau perméable aux ondes électromagnétiques. Selon ce premier mode de réalisation, un élément récepteur coopère avec un seul élément récepteur.

Selon un second mode de réalisation de l'invention, la transmission de cette énergie électrique est faite par induction grande distance. Les bobines primaire et secondaire peuvent être plus éloignées entre elles, la distance les séparant pouvant aller de quelques centimètres jusqu'à deux mètres. De préférence, cette distance séparant les bobines primaire et secondaire ne dépassent pas 50 centimètres (cm). De fait, l'élément récepteur peut être éloigné de l'élément émetteur pour, par exemple, être intégré de façon discrète et non visible à chaque équipement. La paroi du plancher du véhicule située entre l'élément émetteur et l'élément récepteur doit également être en un matériau perméable aux ondes électromagnétiques afin de permettre la circulation du champ magnétique qui générera l'apparition d'un courant électrique alternatif induit dans la bobine secondaire. De même, aucun élément pouvant arrêter ou perturber le champ magnétique ne doit se trouver entre l'élément émetteur et l'élément récepteur.

Il est possible, vu la grande distance séparant les bobines primaire et secondaire, d'associer plusieurs éléments récepteurs à un seul élément émetteur. En effet, chaque bobine secondaire des éléments récepteurs peut capter le champ magnétique émis par chaque bobine primaire d'un élément émetteur, générant alors le phénomène de résonnance magnétique dans chaque bobine secondaire de chaque élément récepteur et, par suite, l'apparition d'un courant électrique alternatif induit dans chaque bobine secondaire.

Cependant, selon ce second mode de réalisation de l'invention, un élément émetteur coopère de préférence avec un seul élément récepteur. Ainsi, le rendement du transfert de l'énergie électrique peut être optimisé en fonction de la position de chaque bobine secondaire par rapport à la bobine primaire associée, notamment en adaptant les caractéristiques électriques des circuits primaire et secondaire, telles que leurs capacités et leurs inductances propres ainsi qu'une inductance mutuelle aux bobines primaire et secondaire associées par couplage inductif, aux positions relatives des bobines primaire et secondaire.

De plus, ces caractéristiques électriques des circuits primaire et secondaire peuvent également être ajustées afin que le couplage inductif ait lieu par induction courte distance ou par induction longue distance et également en fonction des besoins des fonctions électriques reliées à chaque élément récepteur. Les caractéristiques électriques des circuits primaire et secondaire s'adaptent ainsi à la quantité d'énergie électrique nécessaire pour les fonctions électriques de chaque équipement, le rendement de ce transfert d'énergie électrique étant alors optimisé.

Le courant électrique alternatif circulant dans le circuit primaire doit également être adapté afin que le courant électrique alternatif induit circulant dans le circuit secondaire corresponde aux besoins des fonctions électriques de chaque équipement.

Dans ce but, le dispositif selon l'invention comporte au moins un premier moyen de mise en oeuvre et au moins un second moyen de mise en oeuvre, chaque premier moyen de mise en oeuvre étant relié électriquement au circuit primaire d'au moins un élément émetteur et chaque second moyen de mise en oeuvre étant relié électriquement au circuit secondaire d'un élément récepteur. Chaque premier moyen de mise en oeuvre et chaque second moyen de mise en oeuvre permettent d'adapter les caractéristiques électriques des circuits primaires et secondaires.

De plus, chaque premier moyen de mise en oeuvre permet également d'adapter le signal électrique à transmettre à l'élément récepteur et, par suite, le courant électrique alternatif circulant dans le circuit primaire, en fonction des besoins des fonctions électriques reliées à chaque élément récepteur et du type de couplage inductif à réaliser entre les bobines primaire et secondaire. De même, chaque second moyen de mise en oeuvre permet de transformer le courant électrique alternatif induit dans le circuit secondaire pour alimenter les fonctions électriques reliées à chaque élément récepteur. Ainsi, ce second moyen de mise en oeuvre assure ainsi la fonction de convertisseur d'énergie adaptant le courant électrique circulant dans le circuit secondaire au besoin de chaque fonction électrique. Par exemple, le courant électrique alternatif induit est transformé en deux courants continus de deux tensions différentes pour alimenter un airbag et un système multimédia.

Ainsi, chaque premier moyen de mise en oeuvre et chaque second moyen de mise en oeuvre permettent d'adapter les caractéristiques électriques des circuits primaire et secondaire et de traiter les courants électriques circulant respectivement dans les circuits primaire et secondaire, notamment par l'intermédiaire de la boucle d'asservissement entre les bobines primaire et secondaire, afin d'optimiser le rendement de ce transfert d'énergie électrique.

Selon une première implantation de ces premiers moyens de mise en oeuvre, chaque premier moyen de mise en oeuvre peut être relié aux circuits primaires de plusieurs éléments émetteurs afin d'adapter les caractéristiques électriques de ces circuits primaires et de traiter les courants électriques circulant dans ces circuits primaires.

Avantageusement, l'utilisation d'un premier moyen de mise en oeuvre pour plusieurs éléments émetteurs permet de minimiser le nombre de ces premiers moyens de mise en oeuvre intégrés au dispositif d'alimentation électrique sans fil et de simplifier ainsi l'architecture électrique, principalement au niveau des harnais cheminant dans l'épaisseur du plancher du véhicule.

Cependant, il est préférable que les éléments récepteurs soient positionnés à la même distance de l'élément émetteur auxquels ils sont associés et que chaque élément récepteur ait un même besoin en énergie électrique. Dans le cas contraire, des déséquilibres risquent d'apparaître entre les éléments récepteurs et chaque transfert d'énergie n'aura pas un rendement optimum.

Selon une seconde implantation de ces premiers moyens de mise en oeuvre, chaque premier moyen de mise en oeuvre est relié au circuit primaire d'un seul élément émetteur afin adapter les caractéristiques électriques de ce circuit primaire et de traiter le courant électrique circulant dans ce circuit primaire.

Avantageusement, l'utilisation d'un premier moyen de mise en oeuvre pour un seul élément émetteur permet d'optimiser au mieux le rendement du transfert du signal électrique, en adaptant individuellement les caractéristiques électriques de chaque circuit primaire et en traitant le courant électrique circulant dans chaque circuit primaire en fonction des positions relatives des bobines primaire et secondaire et des besoin en énergie électrique de chaque équipement.

Par ailleurs, le dispositif selon l'invention comporte plusieurs seconds moyens de mise en oeuvre du signal électrique reçu, chaque second moyen de mise en oeuvre étant relié au circuit secondaire d'un seul élément récepteur afin adapter les caractéristiques électriques de ce circuit secondaire et de traiter le courant électrique circulant dans ce circuit secondaire.

Le champ magnétique émis par chaque bobine primaire d'un élément émetteur permet l'apparition d'un courant électrique alternatif induit dans chaque bobine secondaire associée, transmettant ainsi un signal électrique et, par suite, une énergie électrique de l'élément émetteur à l'élément récepteur, que ce soit selon une induction courte distance ou une induction grande distance. Cette énergie électrique permet alors d'alimenter électriquement les différentes fonctions électriques intégrées à chaque équipement.

Cependant, chaque équipement électrique peut également avoir besoin d'informations pour commander les différentes fonctions électriques intégrées afin, par exemple, de déclencher le déploiement d'un airbag ou bien de transférer un message sonore ou vidéo. Ces informations doivent alors être transmises à chaque équipement sans liaison filaire à l'instar de la transmission de l'énergie électrique afin de conserver les avantages du dispositif de l'invention.

Cette transmission de ces informations peut être indépendante et dissociée de la transmission de l'énergie électrique, par exemple en utilisant des procédés connus tels que les technologies ***Bluetoorh^{®}*** ou *Wi-Fi^{®}.* Dans ce cas, le dispositif selon l'invention transmet uniquement une énergie électrique à chaque équipement.

De préférence, cette transmission de ces informations est faite par l'intermédiaire du dispositif selon l'invention, en complément de la transmission de l'énergie électrique à chaque équipement, dans le cas de l'induction courte distance. Il est en effet possible de superposer, de façon connue, des informations à un signal électrique. Par exemple, la technologie des courants porteurs est aujourd'hui largement utilisée dans le domaine de l'informatique. De la sorte, le dispositif selon l'invention permet de transmettre à un équipement un signal électrique comportant une énergie électrique et une ou plusieurs informations destinées aux fonctions électriques de cet équipement.

Par contre, dans le cas de l'induction longue distance, la grande distance séparant les bobines primaire et secondaire rend aujourd'hui difficile l'utilisation d'une telle technologie sans perte d'informations. Il est alors préférable que cette transmission d'informations soit indépendante et dissociée de la transmission de l'énergie électrique.

Chaque premier moyen de mise en oeuvre peut permettre de superposer les informations destinées à chaque fonction électrique au courant électrique alternatif circulant dans le circuit primaire alors que le second moyen de mise en oeuvre peut permettre d'extraire ces informations destinées à chaque fonction électrique du courant électrique alternatif induit circulant dans le circuit secondaire. Superposer des informations sur un courant électrique ainsi que les extraire sont aujourd'hui des opérations courantes et connues de l'homme du métier.

La première implantation de ces premiers moyens de mise en oeuvre est particulièrement adaptée lorsque chaque équipement reçoit les mêmes informations, par exemple, des équipements recevant le même signal sonore ou vidéo ou bien un signal de déclenchement d'airbag sur chaque siège lors d'un accident du véhicule. Cependant, cette première implantation permet également de transmettre des informations spécifiques à chaque élément récepteur, toutes les informations étant alors transmises à chaque équipement, le second moyen de mise en oeuvre de chaque équipement extrayant alors les seules informations qui sont destinées à cet équipement.

La seconde implantation de ces premiers moyens de mise en oeuvre est plus particulièrement adaptée lorsque chaque équipement reçoit les informations spécifiques, mais est aussi utilisable pour transmettre des informations identiques à chaque équipement.

Il est aussi possible de combiner les première et seconde implantations des premiers moyens de mise en oeuvre afin, par exemple, d'utiliser d'une part un premier moyen de mise en oeuvre relié à plusieurs éléments émetteurs pour superposer au courant électrique alternatif une ou plusieurs informations identiques destinées à plusieurs équipements et d'autre part des premiers moyens de mise en oeuvre reliés à certains éléments émetteurs pour superposer des informations spécifiques à certains équipements.

Cependant, cette superposition des informations au courant électrique alternatif circulant dans chaque circuit primaire peut être effectuée par un moyen spécifique indépendant du dispositif d'alimentation sans fil selon l'invention.

Il est également possible de réaliser ce transfert d'informations en utilisant sur l'élément émetteur une bobine émettrice indépendante de la bobine primaire et sur l'élément récepteur une bobine réceptrice indépendante de la bobine secondaire. Dans ce cas, le transfert d'informations est réalisé selon le principe connu de la télémétrie.

De plus, quel que soit le mode de transfert des informations utilisé, ces échanges d'informations peuvent avoir lieu dans les deux sens, c'est-à-dire que chaque élément récepteur peut recevoir des informations, mais il peut également envoyer des informations par exemple à l'élément émetteur auquel il est lié par couplage inductif.

Avantageusement, le dispositif d'alimentation électrique sans fil transférant un signal électrique comportant une énergie électrique et éventuellement des informations, le nombre de conducteurs du harnais auquel sont reliés les éléments émetteurs est réduit par rapport à un dispositif d'alimentation traditionnel par liaison filaire. En effet, traditionnellement, un équipement reçoit plusieurs signaux électriques correspondant aux différentes fonctions électriques qu'il comporte, le harnais l'alimentant comportant alors un nombre de conducteurs électriques correspondant au nombre de ces fonctions électriques, par exemple un conducteur pour la mise à la masse et un conducteur supplémentaire pour chaque fonction électrique. Le nombre de conducteurs est donc directement lié au nombre de ces fonctions électriques.

Selon l'invention, le nombre de conducteurs du harnais cheminant dans l'épaisseur du plancher est indépendant du nombre de ces fonctions électriques de chaque équipement. En effet, les informations nécessaires au fonctionnement de ces fonctions électriques sont transmises sans liaison filaire, que ce soit par l'intermédiaire du dispositif selon l'invention ou bien par un autre moyen. De fait, un seul courant électrique est suffisant pour alimenter les éléments émetteurs et circule dans ce harnais qui ne nécessite donc qu'un nombre réduit de conducteurs, indépendamment du nombre des fonctions électriques de chaque équipement. Par exemple, ce nombre de conducteurs électrique est de deux.

En conséquence, ce harnais comportant moins de conducteurs que pour un dispositif d'alimentation traditionnel par liaison filaire, son cheminement dans l'épaisseur du plancher est ainsi facilité. De même, le coût et la masse de ce harnais sont également réduits ainsi que sa maintenance.

Cette réduction du nombre de conducteurs électriques est particulièrement intéressante dans le cas particulier des aéronefs à voilure tournante dont les planchers ont une faible épaisseur, de l'ordre de 20 à 30 millimètres par exemple.

Cette faible épaisseur du plancher des aéronefs à voilure tournante impose également des dimensions réduites à chaque élément émetteur et notamment à chaque bobine primaire. De plus, la masse de ces éléments émetteurs doit également être réduite afin de ne pas pénaliser la masse du dispositif. Dans le but de limiter les dimensions et, par suite, la masse de ces bobines primaire et secondaire, la puissance du dispositif d'alimentation électrique selon l'invention est limitée à quelques centaines de watts. Avantageusement, chaque bobine secondaire, étant alors de dimensions réduites, est plus facilement intégrable dans les équipements. Par exemple, pour transmettre une puissance de l'ordre de 100 W, une bobine primaire peut avoir un diamètre de 20 cm et une hauteur de 5 mm.

De plus, dans le cas particulier des aéronefs à voilure tournante, un réservoir à carburant est généralement situé directement sous le plancher. De fait, le passage d'un harnais sous le plancher, c'est-à-dire dans le réservoir à carburant, ainsi que l'utilisation de connecteurs est à éviter ou bien soumis à de fortes contraintes de sécurité afin de supprimer les risques d'incendies qui peuvent être créés par un échauffement ou une étincelle par exemple. Avantageusement, le dispositif selon l'invention comporte un harnais cheminant dans l'épaisseur du plancher et supprime ainsi une partie de ces risques d'incendie. De plus, l'utilisation de liaison sans fil pour transmettre l'énergie électrique et éventuellement des informations de commande permet la suppression des connecteurs et des risques associés. Ainsi, un équipement positionné dans le réservoir, tel qu'une pompe à carburant, peut être alimenté par le dispositif d'alimentation électrique sans fil selon l'invention, un élément récepteur étant implanté dans cette pompe à carburant, supprimant ainsi les risques mentionnés précédemment.

Par ailleurs, chaque élément émetteur étant noyé dans cette épaisseur du plancher, la surface supérieure du plancher du véhicule ne présente aucune partie saillante, aussi bien dans les zones sans équipement que dans les zones où un équipement est installé. Le dispositif d'alimentation sans fil selon l'invention supprime ainsi le risque de détérioration des interfaces électriques implantées traditionnellement sur le plancher par un élément extérieur ainsi que la gêne qu'elles pourraient occasionner en dépassant par exemple de la surface supérieure du plancher.

De plus, selon l'invention, chaque élément émetteur est noyé dans l'épaisseur du plancher et aucun connecteur n'est nécessaire pour alimenter électriquement chaque équipement, chaque élément émetteur est ainsi isolé de l'environnement extérieur et protégé par la paroi du plancher du véhicule de l'intrusion d'objets ou de liquide pouvant provoquer une dégradation ou un court-circuit. Chaque élément émetteur est également protégé des chocs éventuellement provoqués par les personnes se déplaçant sur le plancher ou par les charges transportées.

On comprend alors que, grâce au dispositif selon l'invention, l'intérieur d'un véhicule peut être reconfiguré rapidement, selon les différentes positions et orientations possibles des équipements se trouvant au dessus du plancher, tels des sièges, tout en restant compatible avec les différentes fonctions électriques de ces équipements, et sans qu'il soit nécessaire de modifier les harnais présents dans l'épaisseur du plancher, ni même de connecter physiquement un équipement. De plus, les zones comportant un équipement ou bien sans équipement présente alors un plancher plat, sans partie saillante et gênante pour tout déplacement ou chargement.

Avantageusement, l'absence de connexion électrique filaire entre chaque équipement et chaque élément émetteur permet tout d'abord un gain de temps dans la reconfiguration de la cabine de l'aéronef. De plus, cela permet, aucun connecteur et ni harnais associé n'étant utilisé pour alimenter électriquement chaque équipement, de supprimer le risque de dégradation lors du montage ou du démontage de ces composants utilisés traditionnellement. Par exemple, un tel connecteur utilisé traditionnellement en aéronautique est garanti pour au moins cinquante manoeuvres de montage/démontage alors que le dispositif d'alimentation électrique selon l'invention permet d'assurer jusqu'à cinq mille utilisations, ce qui correspond à la durée de vie d'une fixation mécanique de siège et de son verrouillage. Il résulte de la suppression de ces connecteurs et de ces harnais une réduction des opérations de maintenance et, par suite, une baisse des coûts de maintenance. De plus, chaque élément émetteur étant noyé dans l'épaisseur du plancher et aucune liaison filaire n'existant avec l'élément récepteur de chaque équipement, l'isolation d'une part de cet élément émetteur et d'autre part de l'équipement est nettement améliorée. De la sorte, ils sont parfaitement protégés de l'environnement extérieur, qui peut être agressif (sable, eau de mer, boue...) notamment pour les composants électriques, ainsi que des différentes charges qui peuvent être transportées et de leur contenu.

Le dispositif peut de plus comporter une ou plusieurs caractéristiques supplémentaires.

Plusieurs solutions permettent d'améliorer le rendement du transfert de l'énergie électrique, que ce soit par induction courte distance ou par induction grande distance.

Tout d'abord il est possible de multiplier d'une part le nombre de bobines primaires afin d'améliorer l'intensité du champ magnétique généré et d'autre part le nombre de bobines secondaires afin d'améliorer le couplage inductif du champ magnétique. Les différentes bobines peuvent être coaxiales et superposées ou bien côte à côte et parallèles. Lorsque les bobines primaires sont coaxiales et superposées, on obtient également une meilleure concentration du champ magnétique que l'on peut orienter vers chaque bobine secondaire de l'élément récepteur à alimenter, minimisant ainsi les fuites magnétiques.

Ensuite, il est possible d'ajouter un noyau primaire ou secondaire en un matériau ferromagnétique respectivement au centre de chaque bobine primaire ou secondaire. Le noyau primaire permet pour chaque bobine primaire d'améliorer la concentration du champ magnétique et de minimiser ainsi les fuites magnétiques alors que le noyau secondaire permet pour chaque bobine secondaire d'améliorer la captation du champ magnétique et de minimiser également les fuites magnétiques. Si plusieurs bobines primaires ou secondaires sont parallèles et côte à côte, il est possible d'ajouter un noyau primaire ou secondaire par bobine.

Afin de canaliser le champ magnétique généré par chaque bobine primaire, améliorant ainsi sa concentration tout en minimisant les fuites magnétiques, chaque bobine primaire peut être placée au milieu de cloisons en un matériau ferromagnétique à l'exception de la paroi inférieure ou bien de la paroi supérieure du plancher qui est en un matériau perméable aux ondes électromagnétiques. Le champ magnétique est ainsi canaliser vers la surface inférieure ou bien la surface supérieure du plancher. Les matériaux ferromagnétiques couramment utilisés sont notamment le fer, le cobalt et le nickel.

Par exemple, si seule la paroi supérieure du plancher est en un matériau perméable aux ondes électromagnétiques alors que les autres cloisons entourant chaque bobine primaire sont en un matériau ferromagnétique, l'élément émetteur est capable de transmettre une énergie électrique uniquement à un élément récepteur positionné au-dessus du plancher, avec un rendement maximum, l'ensemble du champ magnétique généré par cet élément émetteur étant canalisé dans cette direction.

Par contre, si la paroi supérieure et la paroi inférieure du plancher sont en un matériau perméable aux ondes électromagnétiques alors que les autres cloisons entourant chaque bobine primaire sont en un matériau ferromagnétique, l'élément émetteur est capable de transmettre une énergie électrique à un élément récepteur positionné au-dessus du plancher et à un élément récepteur positionné au-dessous du plancher, mais avec un rendement plus faible, le champ magnétique généré par cet élément émetteur étant canalisé dans ces deux directions.

Les parois supérieure et inférieure du plancher du véhicule doivent être au moins partiellement en un matériau perméable aux ondes électromagnétiques entre chaque élément émetteur et chaque équipement situé à proximité, permettant ainsi la circulation d'au moins un champ magnétique entre la bobine primaire d'un élément émetteur et chaque bobine secondaire d'un élément récepteur. On trouve parmi de tels matériaux certaines matières plastiques telles que le polyamide.

Ces parois du plancher peuvent alors être entièrement réalisées dans un matériau de ce type. Le plancher peut également comporter des éléments rapportés dans un matériau de ce type, tels des capots au-dessus et/ou en-dessous de chaque élément émetteur, permettant ainsi un accès aux éléments émetteurs pour une éventuelle maintenance de ces éléments émetteurs. Dans ce cas, une solution d'étanchéité, telle qu'un joint, peut être utilisée si nécessaire pour assurer l'étanchéité de chaque élément émetteur vis-à-vis de l'environnement extérieur.

La présente invention a également pour objet un aéronef équipé d'un tel dispositif, le harnais cheminant dans l'épaisseur du plancher et chaque élément émetteur étant noyé dans cette épaisseur du plancher afin que les surfaces inférieure et supérieure du plancher ne présentent aucune partie saillante, notamment dans les zones où aucun équipement n'est monté. Un élément récepteur est également intégré à chaque équipement.

L'exemple du siège a été parfois pris dans la description ci-dessus et il sera utilisé pour illustrer les exemples suivants, mais ce dispositif peut être étendu à tout équipement fixé à l'intérieur du véhicule, à proximité du plancher, et nécessitant une alimentation électrique.

L'invention et ses avantages apparaîtront avec plus de détails dans le cadre de la description qui suit avec des exemples de réalisation donnés à titre illustratif en référence aux figures annexées qui représentent :
- la figure 1, une vue d'un aéronef et de l'intérieur de sa cabine,
- la figure 2, une vue de l'intérieur de la cabine d'un véhicule équipée de sièges,
- la figure 3, une vue en coupe de l'implantation d'un harnais dans le plancher et des équipements alimentés,
- la figure 4, une vue du plancher et d'éléments émetteurs,
- la figure 5, une implantation du harnais, des éléments émetteurs et des éléments récepteurs, et
- les figures 6 et 7, une vue d'un siège selon deux modes de réalisation différents de l'invention.

Les éléments présents dans plusieurs figures distinctes sont affectés d'une seule et même référence.

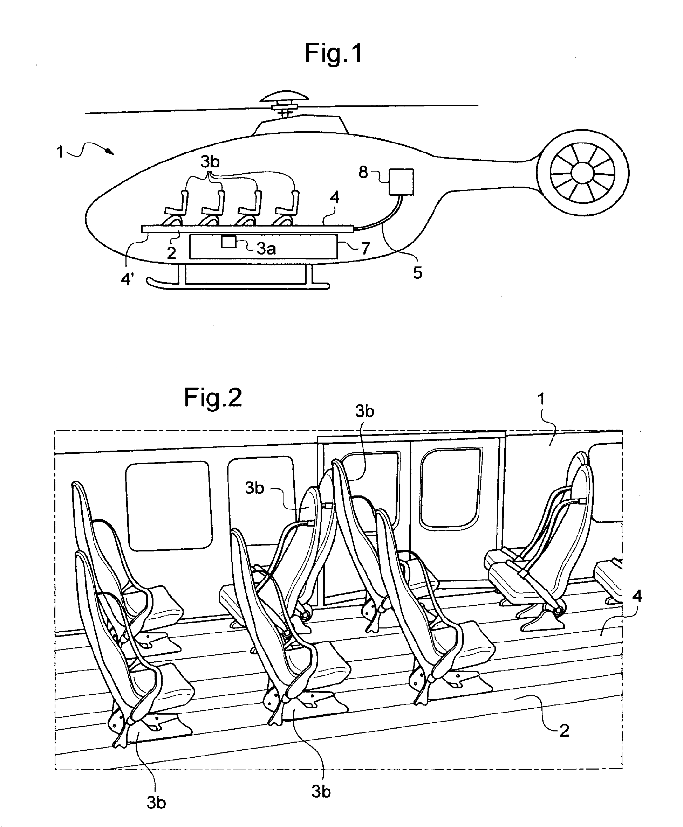

La figure 1 présente un aéronef à voilure tournante 1 à l'intérieur duquel se trouvent plusieurs équipements 3, tels qu'une pompe à carburant 3a positionnée dans un réservoir 7 situé sous la surface inférieure 4' d'un plancher 2 ou bien un siège 3b fixé sur la surface supérieure 4 du plancher 2. Les différentes fonctions électriques qui peuvent être intégrées à chaque équipement 3 sont alimentées par l'intermédiaire d'un harnais 5, cheminant dans l'épaisseur du plancher 2 et relié au moins à une source d'alimentation 8 de l'aéronef 1.

La figure 2 présente une implantation de sièges 3b à l'intérieur de l'aéronef à voilure tournante 1. Ces sièges 3b sont fixés sur la surface supérieure 4 du plancher 2. D'autres implantations des sièges 3b ou d'autres équipements 3 sont possibles pour cet aéronef 1.

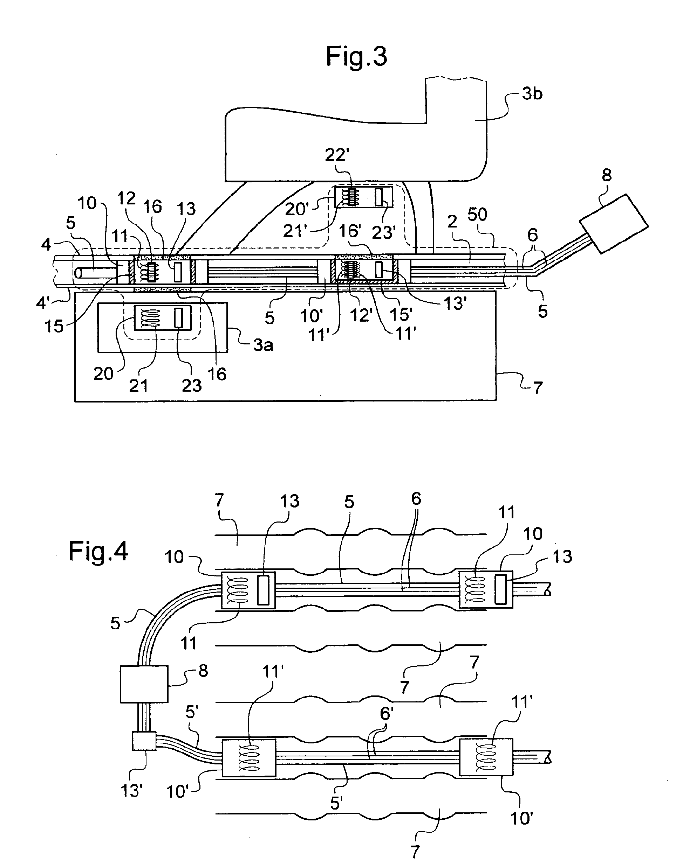

On peut voir sur la figure 3 le dispositif d'alimentation électrique sans fil 50 comportant un harnais électrique 5, deux éléments émetteurs 10,10' et deux éléments récepteurs 20,20'. Le harnais 5, comportant au moins deux conducteurs 6, chemine dans l'épaisseur du plancher 2, chaque conducteur 6 étant relié électriquement d'une part à une source d'alimentation électrique 8 et éventuellement à une source d'informations de l'aéronef 1 et d'autre part aux deux éléments émetteurs 10,10'.

Chaque élément émetteur 10,10' est noyé dans l'épaisseur du plancher 2 et est ainsi protégé par les parois de ce plancher 2 de l'environnement extérieur pouvant être agressif (sable, eau de mer, boue...) et des différentes charges transportées dans l'aéronef 1 ou de leur contenu. Cette protection permet d'éviter l'intrusion d'éléments étrangers ou de liquide au niveau de chaque élément émetteur 10,10', susceptible de générer des dégradations mécaniques ou des courts-circuits. De plus, la surface supérieure 4 du plancher 2 est ainsi plate, sans saillie, ni aspérité.

Chaque élément émetteur 10,10' est également isolé par les parois de ce plancher 2 du réservoir 7 et des vapeurs de carburant présent dans ce réservoir 7. De plus, la surface inférieure 4' du plancher 2 est également sans saillie, ni aspérité, et ne risque donc pas de dégrader un réservoir 7 souple qui peut se trouver sous le plancher 2.

Un premier élément émetteur 10 comporte une première bobine primaire 11, un premier noyau primaire 12, un premier moyen de mise en oeuvre 13 et des premières cloisons 15 positionnées de chaque côté de ce premier élément émetteur 10 à l'exception des faces supérieure et inférieure. La première bobine primaire 11 est réalisée par un enroulement d'au moins un fil conducteur tel que du cuivre et fait partie d'un premier circuit primaire (non représenté). Cette première bobine primaire 11 génère un champ magnétique lorsqu'un courant électrique alternatif circule dans le premier circuit primaire.

Le premier noyau primaire 12 est en un matériau ferromagnétique et permet d'améliorer notamment la concentration de ce champ magnétique. Les premières cloisons 15 sont également en un matériau ferromagnétique et permettent de canaliser le champ magnétique en l'orientant dans une ou plusieurs directions particulières. Dans le cas de ce premier élément émetteur 10, le champ magnétique est canalisé vers les faces supérieure et inférieure du plancher 2 dans l'épaisseur duquel est noyé ce premier élément émetteur 10. De plus, pour que ce champ magnétique puisse se propager au-delà du plancher 2, les parois supérieure et inférieure 16 du plancher 2, dans la zone de ce premier élément émetteur 10, sont en un matériau perméable aux champs magnétiques. Ces parois supérieure et inférieure 16 peuvent être des parties constitutives du plancher 2 ou bien des éléments rapportés, tels des capots 16. De plus, ces capots 16 peuvent être amovibles, permettant ainsi un accès aux éléments émetteurs 10 pour une éventuelle maintenance. Dans ce cas, une solution d'étanchéité, telle qu'un joint, peut être utilisée si nécessaire pour assurer l'étanchéité de chaque élément émetteur 10 vis-à-vis de l'environnement extérieur.

De fait, ce champ magnétique émis par le premier élément émetteur 10 peut être capté par un premier élément récepteur 20 positionné à proximité de la face inférieure du plancher 2. Cependant, il pourrait également être capté par un élément récepteur positionné à proximité de la face supérieure du plancher 2. Ce premier élément récepteur 20 comporte une première bobine secondaire 21 faisant partie d'un premier circuit secondaire (non représenté) et un second moyen de mise en oeuvre 23. Un couplage inductif entre la première bobine primaire 11 et la première bobine secondaire 21 peut alors être réalisé, un courant électrique alternatif induit circulant alors dans la première bobine secondaire 21.

Ce courant électrique alternatif induit comporte alors un signal électrique contenant une énergie électrique transmise par ce premier élément émetteur 10 à ce premier élément récepteur 20. Ce premier élément récepteur 20 peut être positionné dans un équipement 3, telle une pompe à carburant 3a, positionnée dans le réservoir 7 situé en dessous du plancher 2. Le premier élément récepteur 20 et le premier élément émetteur 10 sont positionnés par exemple de part et d'autre de la paroi inférieure du plancher 2, le couplage inductif entre la bobine primaire 11 et la bobine secondaire 21 étant réalisé par induction courte distance.

Le premier moyen de mise en oeuvre 13 et le second moyen de mise en oeuvre 23, reliés électriquement respectivement au premier circuit primaire et au premier circuit secondaire, permettent d'adapter les caractéristiques électriques des premiers circuits primaire et secondaire, telles que leurs capacités et leurs inductances propres ainsi qu'une inductance mutuelle aux premières bobines primaire et secondaire associées par couplage inductif. Ces caractéristiques électriques des premiers circuits primaire et secondaire sont adaptées selon d'une part le besoin électrique de la pompe à carburant 3a contenant le premier élément récepteur 20, c'est-à-dire la quantité d'énergie électrique nécessaire pour le fonctionnement de cette pompe à carburant 3a, et d'autre part du type de couplage inductif réalisé, c'est-à-dire l'induction courte distance dans ce cas, optimisant ainsi le rendement du transfert d'énergie électrique entre le premier élément émetteur 10 et le premier élément récepteur 20.

De plus, le premier moyen de mise en oeuvre 13 permet de transformer un courant électrique circulant dans les conducteurs 5 du harnais 6 en un courant électrique alternatif circulant dans le premier circuit primaire permettant l'apparition d'un courant électrique alternatif induit dans la première bobine secondaire 21. Ce premier moyen de mise en oeuvre 13 permet également d'adapter ce courant électrique alternatif circulant dans le premier circuit primaire afin que le courant électrique alternatif induit dans la première bobine secondaire 21 corresponde au besoin électrique de la pompe à carburant 3a.

Par ailleurs, le second moyen de mise en oeuvre 23 permet de transformer le courant électrique alternatif induit en un courant électrique, par exemple continu, alimentant cette pompe à carburant 3a.

Sur cette figure 3, un second élément émetteur 10' comporte deux secondes bobines primaires 11', un second noyau primaire 12', un troisième moyen de mise en oeuvre 13' et des secondes cloisons 15' positionnées de chaque côté de ce second élément émetteur 10' à l'exception de la face supérieure. Les secondes bobines primaires 11' sont réalisées par un enroulement d'au moins un fil conducteur tel que du cuivre et font partie d'un second circuit primaire (non représenté). Ces secondes bobines primaires 11' génèrent un champ magnétique lorsqu'un courant électrique alternatif circule dans le second circuit primaire, l'utilisation de deux secondes bobines primaires permettant d'augmenter l'intensité du champ magnétique généré. De plus, les deux secondes bobines primaires 11' sont coaxiales et superposées et permettent d'obtenir une meilleure concentration de ce champ magnétique, minimisant ainsi les fuites magnétiques.

Comme précédemment, le second noyau primaire 12' et les secondes cloisons 15' sont en matériaux ferromagnétiques, le second noyau primaire 12' permettant d'améliorer notamment la concentration de ce champ magnétique et les secondes cloisons 15' permettent de canaliser le champ magnétique en l'orientant vers la face supérieure du plancher 2. De plus, pour que ce champ magnétique puisse se propager au-delà du plancher 2, la paroi supérieure 16' du plancher 2, qui peut être une partie constitutive du plancher 2 ou bien un élément rapporté, tels un capot, est en un matériau perméable aux champs magnétiques dans la zone de ce second élément émetteur 10'.

De fait, ce champ magnétique émis par le second élément émetteur 10' peut être capté par un second élément récepteur 20' positionné à proximité de la face supérieure du plancher. Ce second élément récepteur 20' comporte une bobine secondaire 21' faisant partie d'un second circuit secondaire (non représenté), un premier noyau secondaire 22' et un quatrième moyen de mise en oeuvre 23'. Un couplage inductif entre les secondes bobines primaires 11' et la seconde bobine secondaire 21' peut alors être réalisé, un courant électrique alternatif induit circulant alors dans la seconde bobine secondaire 21'. Comme précédemment, ce courant électrique alternatif induit comporte un signal électrique contenant une énergie électrique transmise par le second élément émetteur 10' au second élément récepteur 20'.Ce second élément récepteur 20' peut être positionné dans un équipement 3, tel un siège 3b, fixé sur la face supérieure 4 du plancher 2. Le second élément émetteur 10' est noyé dans le plancher 2 alors que le second élément récepteur 20' est positionné sous le siège 3b, à quelques dizaines de centimètres de la paroi supérieure du plancher 2, le couplage inductif entre les secondes bobines primaires 11' et la seconde bobine secondaire 21' étant réalisé par induction grande distance.

Le premier noyau secondaire 22' est en matériau ferromagnétique et permet d'améliorer la captation du champ magnétique et de minimiser ainsi les fuites magnétiques.

Le troisième moyen de mise en oeuvre 13' et le quatrième moyen de mise en oeuvre 23', reliés électriquement respectivement au second circuit primaire et au second circuit secondaire, permettent d'adapter les caractéristiques électriques des seconds circuits primaire et secondaire, telles que leurs capacités et leurs inductances propres ainsi qu'une inductance mutuelle aux secondes bobines primaire et secondaire associées par couplage inductif, selon d'une part le besoin électrique du siège 3b contenant le second élément récepteur 20', c'est-à-dire de la quantité d'énergie électrique nécessaire pour le fonctionnement des fonctions électriques contenues dans le siège 3b, et d'autre part du type de couplage inductif réalisé, c'est-à-dire l'induction grande distance dans ce cas, optimisant ainsi le rendement du transfert d'énergie électrique entre le second élément émetteur 10' et le second élément récepteur 20'. De plus, le troisième moyen de mise en oeuvre 13' permet également de transformer un courant électrique circulant dans les conducteurs 5 du harnais 6 en un courant électrique alternatif circulant dans le second circuit primaire permettant l'apparition du courant électrique alternatif induit dans la seconde bobine secondaire 21'.

Comme précédemment, le troisième moyen de mise en oeuvre 13' permet de transformer un courant électrique circulant dans les conducteurs 5 du harnais 6 en un courant électrique alternatif circulant dans le premier circuit primaire et de l'adapter afin que le courant électrique alternatif induit dans la seconde bobine secondaire 21' corresponde au besoin électrique du siège 3b.

Par ailleurs, le quatrième moyen de mise en oeuvre 23' permet de transformer le courant électrique alternatif induit en un ou plusieurs courants électriques, par exemple continus, alimentant les différentes fonctions électriques du siège 3b. Ces fonctions électriques sont par exemple un airbag intégré au siège 3b, un système multimédia ou bien un système de communication.

De plus, ce dispositif d'alimentation sans fil 50 peut permettre également de transmettre des informations à chaque équipement 3. En effet, des informations peuvent être superposées au signal électrique transmis par l'élément émetteur 10 à l'élément récepteur 20 en utilisant, par exemple, la technologie des courants porteurs. De fait, cette superposition d'informations au signal électrique peut être faite par les premiers moyens de mise en oeuvre 13,13' ou bien par un moyen indépendant de ce dispositif d'alimentation sans fil 50.

Par ailleurs, cette transmission d'informations peut également être faite de façon indépendante du dispositif d'alimentation sans fil 50 en utilisant, par exemple, des technologies de types *Bluetooth*^{®} ou *Wi-Fi*^{®}.

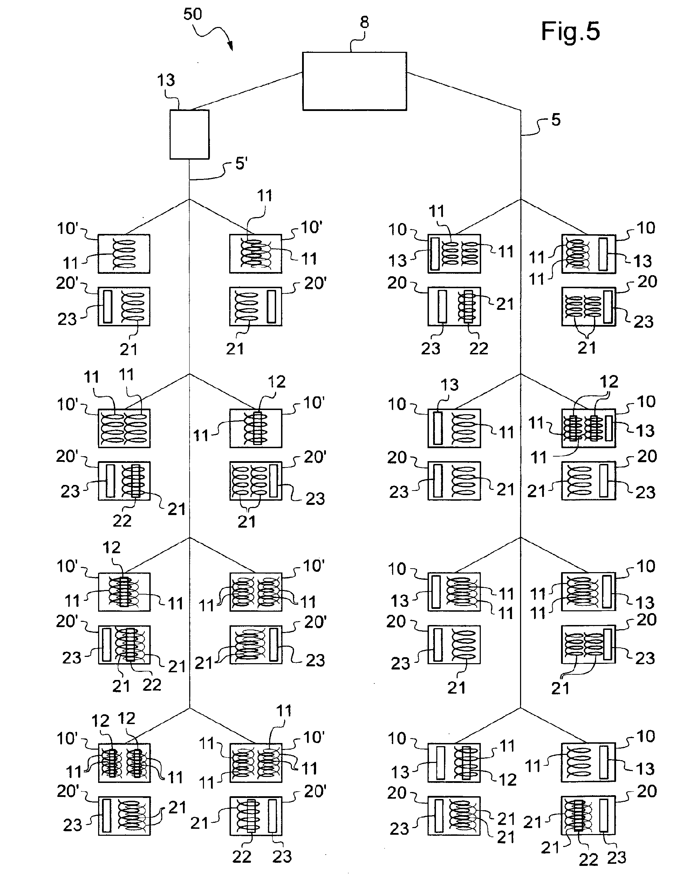

Les figures 4 et 5 représentent une implantation des harnais 5,5', des éléments émetteurs 10,10' et des éléments récepteurs 20,20'. Sur la figure 4, le plancher 2 comporte des rails 7 pour la fixation de sièges 3b et des éléments émetteurs 10,10' situés à côté de ces rails 7. Chaque élément émetteur 10,10' est relié aux conducteurs 6,6' des harnais 5,5' cheminant dans le plancher 2. Chaque premier élément émetteur 10 comporte une bobine primaire 11 et un premier moyen de mise en oeuvre 13, les conducteurs 6 du harnais 5 étant reliés directement à une source d'alimentation 8 de l'aéronef 1. Par contre, chaque second élément émetteur 10' comporte une bobine primaire 11', un premier moyen de mise en oeuvre 13' étant relié par l'intermédiaire des conducteurs 6' du harnais 5' à chaque second élément émetteur. De fait, le moyen de mise en oeuvre 13' permet notamment d'adapter les caractéristiques électriques de chaque élément émetteur 10', limitant ainsi le nombre de ces premiers moyens de mise en oeuvre.

Sur la figure 5, les harnais 5,5' sont représentés avec chaque élément émetteur 10,10' et chaque élément récepteur 20,20' associé. Comme sur la figure 4, chaque premier élément émetteur 10 comporte un premier moyen de mise en oeuvre 13 alors que pour les seconds éléments émetteurs 10', un seul premier moyen de mise en oeuvre 13' est nécessaire et relié au harnais 5'. Chaque élément émetteur 10,10' comporte une ou plusieurs bobines primaires 11 et peut comporter également un ou plusieurs noyaux primaires 12. Chaque élément récepteur 20,20' comporte une ou plusieurs bobines secondaires 21 et peut comporter également un ou plusieurs noyaux secondaires 22. Les nombres de bobines primaires 11 et de bobines secondaires 21 sont indépendants, de même que les nombres des noyaux 12,22 des éléments émetteurs 10,10' et récepteurs 20,20'.

Par exemple, un premier élément émetteur 10 comportant deux bobines primaires 11 et deux noyaux primaires 12 coopère avec un premier élément récepteur 20 comportant une seule bobine secondaire 21 et aucun noyau secondaire 22. De même, un élément émetteur 10 comportant une bobine primaire 11 et aucun noyau primaire 12 coopère avec un élément récepteur 20 comportant deux bobines secondaires 21 et un noyau secondaire 22.

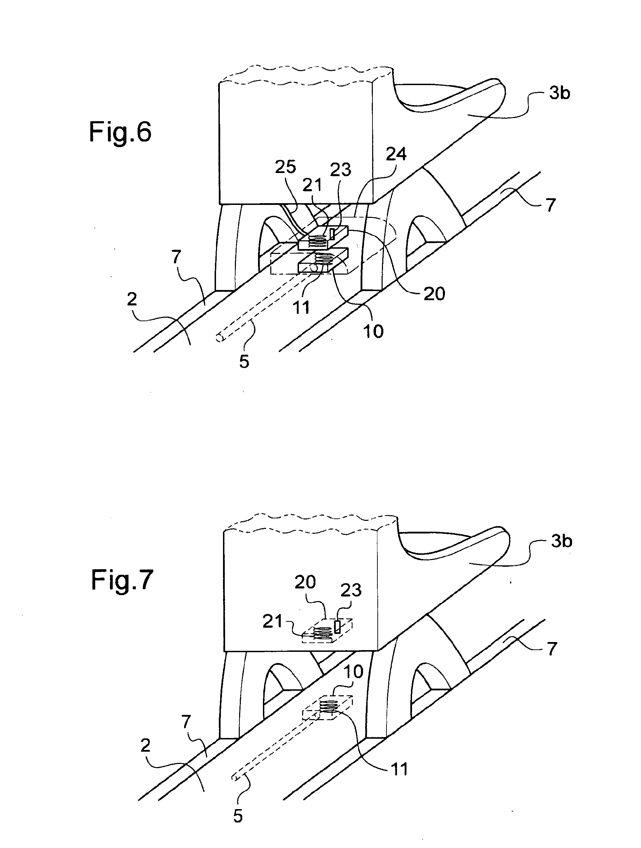

Les figures 6 et 7 représentent un siège 3b selon deux modes de réalisation de l'invention, à savoir un couplage inductif par induction courte distance et un couplage inductif par induction grande distance. Dans les deux cas, un siège 3b est fixé sur la face supérieure d'un plancher 2, par l'intermédiaire de deux rails 7 de fixation. Un élément émetteur 10, comportant une bobine primaire 11 et relié à un harnais 5, est noyé dans l'épaisseur du plancher 2.

Dans le cas de l'induction courte distance représenté sur la figure 6, un élément récepteur 20 est fixé au siège 3b et positionné au plus prés du plancher 2 en vis-à-vis de l'élément émetteur 10, c'est-à-dire que l'élément émetteur 10 et l'élément récepteur 20 sont séparés par la paroi supérieure du plancher 2. Cet élément récepteur 20 comporte une bobine secondaire 21 et un second moyen de mise en oeuvre 23, et est relié électriquement aux différentes fonctions électriques de ce siège 3b par un faisceau 25. De fait, quelques centimètres séparant l'élément émetteur 10 et l'élément récepteur 20, un couplage inductif par induction courte distance peut être réalisé entre chaque bobine primaire et chaque bobine secondaire. Dans ce cas, l'élément récepteur 20 est accessible, par exemple par les pieds d'un autre passager de l'aéronef. Cet élément récepteur 20 doit donc être protégé par un carter 24.

Dans le cas de l'induction grande distance représenté sur la figure 7, un élément récepteur 20 est fixé au siège 3b et positionné par exemple sous l'assise du siège 3b en vis-à-vis de l'élément émetteur 10. Cet élément récepteur 20 comporte au moins une bobine secondaire et un moyen de mise en oeuvre, et est relié électriquement aux différentes fonctions électriques de ce siège 3b. De fait, une distance de l'ordre de quelques dizaines de centimètres séparant l'élément émetteur 10 et l'élément récepteur 20, un couplage inductif par induction grande distance peut être réalisé entre chaque bobine primaire et chaque bobine secondaire. Avantageusement, l'élément récepteur 20 peut dans ce cas être intégré de façon discrète dans le siège 3b, n'étant ni visible, ni accessible.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif d'alimentation électrique sans fil (50) d'équipements (3) d'un véhicule (1), ledit dispositif (50) comprenant :
- au moins un harnais électrique (5) muni d'au moins deux conducteurs électriques (6) reliés électriquement à une source d'alimentation électrique (8) dudit véhicule (1),
- au moins un élément émetteur (10) relié électriquement audit conducteur (6) dudit harnais (5), chaque élément émetteur (10) comportant au moins une bobine primaire (11), et
- au moins un élément récepteur (20), chaque élément émetteur (10) coopérant avec au moins un élément récepteur (20) afin de lui transmettre au moins un signal électrique, chaque élément récepteur (20) comportant au moins une bobine secondaire (21), un couplage inductif étant établi entre chaque bobine primaire (11) d'un élément émetteur (10) et chaque bobine secondaire (21) d'un élément récepteur (20) et un signal électrique étant transmis par ledit élément émetteur (10) audit élément récepteur (20),
**caractérisé en ce que** ledit dispositif d'alimentation électrique sans fil (50) comprend au moins une partie d'un plancher (2) dudit véhicule (1), ledit harnais (5) cheminant dans une épaisseur dudit plancher (2), chaque équipement (3) étant apte à être installé à proximité dudit plancher (2), chaque élément émetteur (10) étant noyé dans ladite épaisseur dudit plancher (2) afin qu'une surface inférieure (4') et une surface supérieure (4) dudit plancher (2) ne présentent aucune partie saillante, ledit élément récepteur (20) étant apte à être positionné dans ledit équipement (3) et ledit plancher (2) étant en un matériau perméable aux ondes électromagnétiques entre chaque élément émetteur (10) et chaque équipement (3).

2. Dispositif d'alimentation électrique sans fil (50) selon la revendication 1,
**caractérisé en ce que** chaque élément émetteur (10) comporte au moins un noyau primaire (12).

3. Dispositif d'alimentation électrique sans fil (50) selon l'une quelconque des revendications 1 à 2,
**caractérisé en ce que** chaque élément récepteur (20) comporte au moins un noyau secondaire (22).

4. Dispositif d'alimentation électrique sans fil (50) selon l'une quelconque des revendications 1 à 3,
**caractérisé en ce que** chaque élément émetteur (10) peut transmettre un signal électrique à au moins deux éléments récepteurs (20).

5. Dispositif d'alimentation électrique sans fil (50) selon l'une quelconque des revendications 1 à 3,
**caractérisé en ce que** chaque élément émetteur (10) transmet un signal électrique à un seul élément récepteur (20).

6. Dispositif d'alimentation électrique sans fil (50) selon l'une quelconque des revendications 1 à 5,
**caractérisé en ce que** chaque élément émetteur (10) transmet un signal électrique comportant une énergie électrique.

7. Dispositif d'alimentation électrique sans fil (50) selon l'une quelconque des revendications 1 à 5,
**caractérisé en ce que** chaque élément émetteur (10) transmet un signal électrique comportant une énergie électrique et au moins une information destinée à au moins une fonction électrique dudit équipement (3).

8. Dispositif d'alimentation électrique sans fil (50) selon l'une quelconque des revendications 1 à 7,
**caractérisé en ce que** chaque élément récepteur (20) est apte à être positionné dans un équipement (3) situé au dessus dudit plancher (2).

9. Dispositif d'alimentation électrique sans fil (50) selon l'une quelconque des revendications 1 à 8,
**caractérisé en ce que** chaque élément récepteur (20) est apte à être positionné dans un équipement (3) situé en dessous dudit plancher (2).

10. Dispositif d'alimentation électrique sans fil (50) selon la revendication 8,
**caractérisé en ce que** ledit équipement (3) est un siège (3b) fixé audit plancher (2).

11. Dispositif d'alimentation électrique sans fil (50) selon la revendication 10,
**caractérisé en ce que** ledit équipement (3) est une pompe à carburant (3a) positionnée dans un réservoir (7) situé sous ledit plancher (2).

12. Dispositif d'alimentation électrique sans fil (50) selon l'une quelconque des revendications 1 à 11,
**caractérisé en ce que** ledit dispositif d'alimentation électrique sans fil (50) comporte plusieurs premiers moyens de mise en oeuvre (13), chaque premier moyen de mise en oeuvre (13) étant relié électriquement à un circuit primaire d'un élément émetteur (10) afin d'adapter les caractéristiques électriques dudit circuit primaire.

13. Dispositif d'alimentation électrique sans fil (50) selon l'une quelconque des revendications 1 à 12,
**caractérisé en ce que** ledit dispositif d'alimentation électrique sans fil (50) comporte un premier moyen de mise en oeuvre (13), chaque premier moyen de mise en oeuvre (13) étant relié électriquement à chaque circuit primaire de plusieurs éléments émetteurs (10) afin d'adapter les caractéristiques électriques de chaque circuit primaire.

14. Dispositif d'alimentation électrique sans fil (50) selon l'une quelconque des revendications 1 à 13,
**caractérisé en ce que** chaque élément récepteur (20) comporte un second moyen (23) de mise en oeuvre relié électriquement à un circuit secondaire d'un élément récepteur (20) afin d'adapter les caractéristiques électriques dudit circuit secondaire.

15. Dispositif d'alimentation électrique sans fil (50) selon l'une quelconque des revendications 1 à 14,
caractérisé en ce le dit plancher (2) comporte un capot (16) amovible en un matériau perméable aux ondes électromagnétiques entre chaque élément émetteur (10) et chaque équipement (3).

16. Aéronef (1) comprenant
- un plancher (2),
- au moins un équipement (3) installé à proximité dudit plancher (2),
- un dispositif d'alimentation électrique sans fil (50) d'équipement (3).

## Patentansprüche

1. Vorrichtung (50) zur drahtlosen Stromversorgung von Geräten (3) eines Fahrzeugs (1), wobei die Vorrichtung (50) aufweist:
- mindestens einen elektrischen Kabelbaum (5) mit mindestens zwei elektrischen Leitern (6), die elektrisch mit einer Stromversorgung (8) des Fahrzeugs (1) verbunden sind,
- mindestens ein Senderelement (10), das elektrisch mit dem Leiter (6) des Kabelbaums (5) verbunden ist, wobei jedes Senderelement (10) mindestens eine Primärspule (11) aufweist, und
- mindestens ein Empfängerelement (20), wobei jedes Senderelement (10) mit mindestens einem Empfängerelement (20) zusammenwirkt, um ihm mindestens ein elektrisches Signal zu übermitteln, wobei jedes Empfängerelement (20) mindestens eine Sekundärspule (21) aufweist, wobei eine induktive Kopplung zwischen jeder Primärspule (11) eines Senderelements (10) und jeder Sekundärspule (21) eines Empfängerelements (20) hergestellt wird, und ein elektrisches Signal von dem Senderelement (10) an das Empfängerelement (20) übertragen wird,
**dadurch gekennzeichnet, dass** die Vorrichtung (50) zur drahtlosen Stromversorgung mindestens einen Teil eines Fußbodens (20) des Fahrzeugs (1) aufweist, wobei der Kabelbaum (5) in einer Dicke des Fußbodens (20) verläuft, wobei jedes Gerät (3) in der Nähe des Fußbodens (2) installiert werden kann, wobei jedes Senderelement (10) in der Dicke des Fußbodens (2) versenkt ist, sodass eine untere Fläche (4') und eine obere Fläche (4) des Fußbodens (2) keine vorstehenden Bereiche aufweisen, wobei das Empfängerelement (20) in dem Gerät (3) angeordnet sein kann, und der Fußboden (2) aus einem Material besteht, das gegenüber elektromagnetischen Wellen zwischen jedem Senderelement (l.0) und jedem Gerät (3) durchlässig ist.

2. Vorrichtung (50) zur drahtlosen Stromversorgung nach Anspruch 1,
**dadurch gekennzeichnet, dass** jedes Senderelement (10) mindestens einen Primärkern (12) aufweist.

3. Vorrichtung (50) zur drahtlosen Stromversorgung nach einem der Ansprüche 1 bis 2,
**dadurch gekennzeichnet, dass** jedes Empfängerelement (20) mindestens einen Sekundärkern (22) aufweist.

4. Vorrichtung (50) zur drahtlosen Stromversorgung nach einem der Ansprüche 1 bis 3,
**dadurch gekennzeichnet, dass** jedes Senderelement (10) ein elektrisches Signal an mindestens zwei Empfängerelemente (20) senden kann.

5. Vorrichtung (50) zur drahtlosen Stromversorgung nach einem der Ansprüche 1 bis 3,
**dadurch gekennzeichnet, dass** jedes Senderelement (10) ein elektrisches Signal an ein einziges Empfängerelement (20) aussendet.

6. Vorrichtung (50) zur drahtlosen Stromversorgung nach einem der Ansprüche 1 bis 5,
**dadurch gekennzeichnet, dass** jedes Senderelement (10) ein elektrisches Signal aussendet, welches eine elektrische Energie aufweist.

7. Vorrichtung (50) zur drahtlosen Stromversorgung nach einem der Ansprüche 1 bis 5,
**dadurch gekennzeichnet, dass** jedes Senderelement (10) ein elektrisches Signal sendet, welches eine elektrische Energie und mindestens eine Information aufweist, die für mindestens eine elektrische Funktion des Geräts (3) bestimmt ist.

8. Vorrichtung (50) zur drahtlosen Stromversorgung nach einem der Ansprüche 1 bis 7,
**dadurch gekennzeichnet, dass** jedes Empfängerelement (20) in einem Gerät (3) angeordnet sein kann, das über dem Fußboden (2) gelegen ist.

9. Vorrichtung (50) zur drahtlosen Stromversorgung nach einem der Ansprüche 1 bis 8,
**dadurch gekennzeichnet, dass** jedes Empfängerelement (20) in einem Gerät (3) angeordnet werden kann, das unter dem Fußboden (2) gelegen ist.

10. Vorrichtung (50) zur drahtlosen Stromversorgung nach Anspruch 8,
**dadurch gekennzeichnet, dass** das Gerät (3) ein Sitz (3b) ist, der auf dem Boden (2) befestigt ist.

11. Vorrichtung (50) zur drahtlosen Stromversorgung nach Anspruch 10,
**dadurch gekennzeichnet, dass** das Gerät (3) eine Kraftstoffpumpe (3a) ist, die in einem Tank (7) angeordnet ist, der unter dem Fußboden (2) liegt.

12. Vorrichtung (50) zur drahtlosen Stromversorgung nach einem der Ansprüche 1 bis 11,
**dadurch gekennzeichnet, dass** die Vorrichtung (50) zur drahtlosen Stromversorgung mehrere erste Implementierungsmittel (13) aufweist, wobei jedes erste Implementierungsmittel (13) elektrisch mit einer Primärschaltung eines Senderelements (10) verbunden ist, um die elektrischen Eigenschaften der Primärschaltung anzupassen.

13. Vorrichtung (50) zur drahtlosen Stromversorgung nach einem der Ansprüche 1 bis 12,
**dadurch gekennzeichnet, dass** die Vorrichtung (50) zur drahtlosen Stromversorgung ein erstes Implementierungsmittel (13) aufweist, wobei jedes erste Implementierungsmittel (13) elektrisch mit jeder Primärschaltung mehrerer Senderelemente (10) verbunden ist, um die elektrischen Eigenschaften jeder Primärschaltung anzupassen.

14. Vorrichtung (50) zur drahtlosen Stromversorgung nach einem der Ansprüche 1 bis 13,
**dadurch gekennzeichnet, dass** jedes Empfängerelement (20) ein zweites Implementierungsmittel (23) aufweist, das elektrisch mit einer Sekundärschaltung eines Empfängerelements (20) verbunden ist, um die elektrischen Eigenschaften der Sekundärschaltung anzupassen.

15. Vorrichtung (50) zur drahtlosen Stromversorgung nach einem der Ansprüche 1 bis 14,
**dadurch gekennzeichnet, dass** der Fußboden (2) zwischen jedem Senderelement (10) und jedem Gerät (3) einen abnehmbaren Verschlussdeckel (16) aus einem Material, welches gegenüber elektromagnetischen Wellen durchlässig ist, aufweist.

16. Luftfahrzeug (1) mit
- einem Fußboden (2),
- mindestens einem Gerät (3), das nahe dem Fußboden (2) installiert ist,
- einer Vorrichtung (50) zur drahtlosen Stromversorgung des Geräts (3).

## Claims

1. Wireless electrical supply device (50) for equipment (3) of a vehicle (1), said device (50) comprising:
- at least one electrical harness (5) provided with at least two electrical conductors (6) electrically connected to an electrical supply source (8) of said vehicle (1),
- at least one transmitting element (10) electrically connected to said conductor (6) of said harness (5), each transmitting element (10) comprising at least one primary coil (11), and
- at least one receiving element (20), each transmitting element (10) cooperating with at least one receiving element (20) in order transmit at least one electrical signal to it, each receiving element (20) comprising at least one secondary coil (21), an inductive coupling being established between each primary coil (11) of a transmitting element (10) and each secondary coil (21) of a receiving element (20) and an electrical signal being transmitted by said transmitting element (10) to said receiving element (20),
**characterised in that** said wireless electrical supply device (50) comprises at least a part of a floor (2) of said vehicle (1), said harness (5) running through a thickness of said floor (2), each piece of equipment (3) being suitable for installation close to said floor (2), each transmitting element (10) being embedded in said thickness of said floor (2) in order that a lower surface (4') and an upper surface (4) of said floor (2) have no protruding part, said receiving element (20) being suitable for positioning in said piece of equipment (3) and said floor (2) being made of a material permeable to the electromagnetic waves between each transmitting element (10) and each piece of equipment (3).

2. Wireless electrical supply device (50) according to Claim 1,
**characterised in that** each transmitting element (10) comprises at least one primary core (12).

3. Wireless electrical supply device (50) according to any one of Claims 1 to 2,
**characterised in that** each receiving element (20) comprises at least one secondary core (22).

4. Wireless electrical supply device (50) according to any one of Claims 1 to 3,
**characterised in that** each transmitting element (10) can transmit an electrical signal to at least two receiving elements (20).

5. Wireless electrical supply device (50) according to any one of Claims 1 to 3,
**characterised in that** each transmitting element (10) transmits an electrical signal to a single receiving element (20).

6. Wireless electrical supply device (50) according to any one of Claims 1 to 5,
**characterised in that** each transmitting element (10) transmits an electrical signal comprising electrical energy.

7. Wireless electrical supply device (50) according to any one of Claims 1 to 5,
**characterised in that** each transmitting element (10) transmits an electrical signal comprising electrical energy and at least one piece of information intended for at least one electrical function of said piece of equipment (3).

8. Wireless electrical supply device (50) according to any one of Claims 1 to 7,
**characterised in that** each receiving element (20) is suitable for positioning in a piece of equipment (3) situated above said floor (2).

9. Wireless electrical supply device (50) according to any one of Claims 1 to 8,
**characterised in that** each receiving element (20) is suitable for positioning in a piece of equipment (3) situated below said floor (2).

10. Wireless electrical supply device (50) according to Claim 8,
**characterised in that** said piece of equipment (3) is a seat (3b) fixed to said floor (2).

11. Wireless electrical supply device (50) according to Claim 10,
**characterised in that** said piece of equipment (3) is a fuel pump (3a) positioned in a tank (7) situated below said floor (2).

12. Wireless electrical supply device (50) according to any one of Claims 1 to 11,
**characterised in that** said wireless electrical supply device (50) comprises a plurality of first implementation means (13), each first implementation means (13) being electrically connected to a primary circuit of a transmitting element (10) in order to adapt the electrical characteristics of said primary circuit.

13. Wireless electrical supply device (50) according to any one of Claims 1 to 12,
**characterised in that** said wireless electrical supply device (50) comprises a first implementation means (13), each first implementation means (13) being electrically connected to each primary circuit of a plurality of transmitting elements (10) in order to adapt the electrical characteristics of each primary circuit.

14. Wireless electrical supply device (50) according to any one of Claims 1 to 13,
**characterised in that** each receiving element (20) comprises a second implementation means (23) electrically connected to a secondary circuit of a receiving element (20) in order to adapt the electrical characteristics of said secondary circuit.

15. Wireless electrical supply device (50) according to any one of Claims 1 to 14,
**characterised in that** said floor (2) comprises a removable cover (16) made of a material permeable to the electromagnetic waves between each transmitting element (10) and each piece of equipment (3).

16. Aircraft (1) comprising
- a floor (2),
- at least one piece of equipment (3) installed close to said floor (2),
- a wireless electrical supply device (50) according to any one of Claims 1 to 15.
